(19) Europäisches Patentamt
European Patent Office
Office européen des brevets

(11) Publication number: 0 121 260 B1

# (12) EUROPEAN PATENT SPECIFICATION

(45) Date of publication of patent specification: 31.07.91 (51) Int. Cl.5: C08G 59/04, C08G 59/50

(21) Application number: 84103582.7

(22) Date of filing: 31.03.84

## (54) A process for preparing epoxy resins from aliphatic hydroxyl-containing compounds.

(30) Priority: 01.04.83 US 481510

(43) Date of publication of application:
10.10.84 Bulletin 84/41

(45) Publication of the grant of the patent:
31.07.91 Bulletin 91/31

(84) Designated Contracting States:
DE FR IT NL

(56) References cited:
EP-A- 0 022 073
EP-A- 0 031 435
DE-A- 2 828 420
DE-A- 2 854 665
FR-A- 2 130 671

(73) Proprietor: THE DOW CHEMICAL COMPANY
2030 Dow Center Abbott Road P.O. Box 1967
Midland Michigan 48640-1967(US)

(72) Inventor: Massingill, John L.
410 Forest Drive
Lake Jackson Texas 77566(US)

(74) Representative: Hann, Michael, Dr. et al
Patentanwälte Dr. Michael Hann Dr. H.-G.
Sternagel Sander Aue 30
W-5060 Bergisch Gladbach 2(DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

The present invention pertains to a process for preparing epoxy resins from aliphatic hydroxyl-containing compounds. FR-A-2 130 671 respectively the corresponding US-A-3,784, 584 refers to a method of preparing polyglycidyl ethers by reacting an epichlorhydrin with a hydroxy methylphenol ether. The process is performed in the presence of an alkali metal hydroxide and a phase-transfer catalyst. The process requires removal of water by azeotropic distillation under reduced pressure. The process uses aromatic methylols and not aliphatic alcohols.

Epoxy resins prepared from aliphatic hydroxyl-containing compounds have traditionally been prepared by reacting such hydroxyl-containing compounds with an epihalohydrin in the presence of a Lewis acid and subsequently dehydrohalogenating the resultant halohydrin intermediate product with an alkali metal hydroxide. while such products are readily prepared by this method, they contain inordinately high levels of total halide rendering them unsuitable for effective curing with amine curing agents.

U S -A- 4,284,574 teaches a single-stage process for preparing low viscosity glycidyl ethers of aliphatic hydroxyl-containing compounds by reacting the aliphatic hydroxyl-containing compound with epichlorohydrin in the presence of an alkali metal hydroxide and a phase transfer catalyst.

U S -A- 4,373,073 teaches a process for preparing highly pure glycidyl ethers by reacting phenols with epichlorohydrin and subsequent dehydrohalogenation with dilute aqueous alkali. The dehydrohalogenation is carried out in the presence of an onium catalyst whose liquids are hydrocarbon groups chosen from quaternary ammonium compounds with at least one $C_4$-$C_{22}$ aliphatic hydrocarbon group, quaternary phosphonium compounds or tertiary sulphonium compounds. The process may be operated continuously or batchwise.

From DE-A-28 28 420 a process for preparing polyglycidyl ethers of multivalent phenols in the presence of a condensation catalyst is known. Epihalohydrin is reacted with a multivalent phenol in one or several stages in a volatile organic cosolvent using an aqueous solution of an alkali metal hydroxide having low concentrations so that everything remains soluble throughout the reaction.

It is the object of the invention to provide a method for preparing aliphatic based epoxy resins which are lower in total halide content and having a high conversion.

This object is attained by a process for preparing an epoxy resin by reacting (A) a material having an average of more than one aliphatic hydroxyl group per molecule with (B) an epoxy alkyl halide in the presence of (C) an alkali metal hydroxide and (D) at least one phase transfer catalyst, wherein the proportions of components (A) and (B) are such that component (A) dissolves in component (B) and the ratio of equivalents of component (B) to equivalents of component (A) is greater than 1:1, component (C) is employed as an 18 to 70 weight percent aqueous solution and in a quantity which is sufficient to cause separation of the reaction mixture into an aqueous phase and an organic phase and which is at least stoichiometric with the amount of unreacted component (A) after the reaction, component (D) is employed in a quantity of from 0.1 to 10 weight percent based on the reaction mixture, and the reaction is conducted at a temperature of from 0° to 110° C, allowing the reaction mixture to separate into an aqueous phase and an organic phase, removing the aqueous phase, characterized by repeating at least once the steps reacting the organic phase with at least one further quantity of an 18-70 weight percent aqueous solution of an alkali metal hydroxide sufficient to cause separation of the reaction mixture into an aqueous phase and an organic phase and which is at least stoichometric with the amount of unreacted component (A), allowing the reaction mixture again to separate into an aqueous phase and an organic phase, removing the aqueous phase, and recovering the epoxy resin from the organic phase.

The process of the invention has the advantage that the epoxy resins can be cured with amine curing agents as well as with the other traditional epoxy curing agents.

The ratio of equivalents of component (B) to equivalents of component (A) is preferably from 1.5:1 to 10:1, most preferably 1.5:1 to 5:1. Component (C) is preferably employed as a 45 to 55 weight percent aqueous solution. Component (D) is preferably employed in a quantity of from 0.5 to 5 weight percent, most preferably from 0.5 to 1.5 weight percent based upon the reaction mixture. The reaction is conducted at a temperature preferably between 0° and 70° C, most preferably between 15° and 60° C. Advantageously, the reaction is conducted until the concentration of aliphatic hydroxyl groups is no longer substantially decreasing.

The process according to this invention may be operated batchwise or continuously. In continuous operation, an organic phase containing the aliphatic hydroxyl material and the epoxy alkyl halide can be countercurrently contacted with an aqueous phase containing the alkali metal hydroxide. The phase transfer catalyst may be initially in either the organic phase or the aqueous phase before the two phases are contacted together.

Any material having an average of more than one aliphatic hydroxyl group per molecule can be employed herein. Such compounds include, for example, aliphatic diols, triols or tetrols as well as adducts of aromatic hydroxyl-containing compounds with vicinal alkyl epoxide compounds or aromatic substituted vicinal alkyl epoxide compounds.

Particularly suitable aliphatic hydroxyl-containing compounds, include, for example, ethylene glycol, propane diols, butane diols, pentane diols, hexane diols, pentaerythritol, polyoxyalkylene diols, glycerine, trimethylol propane, polyoxyalkylene triols or mixtures thereof. Also suitable are the adducts of phenolic hydroxyl-containing compounds such as, for example, hydroquinone, resorcinol, catechol, bisphenols or novolac resins with alkylene oxides or aromatic substituted alkylene oxides and alkylene carbonates, such as, for example, ethylene oxide, propylene oxide, 1,2-butylene oxide, 2,3-butylene oxide, styrene oxide, ethylene carbonate or mixtures thereof.

The preferred aliphatic hydroxy containing compounds are trimethylol propane, cyclohexanedimethylol, dicyclopentadienmethylol, 1,4-butanediol, ethylene glycol, propylene glycol, dipropylene glycol or pentaerythritol.

Suitable epoxy alkyl halides which can be employed herein include those represented by the formula

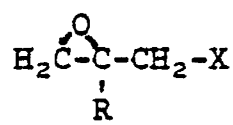

wherein R is hydrogen or an aliphatic hydrocarbon group having from 1 to 4 carbon atoms and X is a halogen, preferably chlorine or bromine.

Suitable alkali metal hydroxides which can be employed herein include, for example, sodium hydroxide, potassium hydroxide, lithium hydroxide or mixtures thereof.

The term phase transfer catalyst as employed herein means that it is a compound which renders the hydroxide anion from the alkali metal hydroxide soluble in the organic phase. Suitable such catalysts include, for example, quaternary ammonium compounds, quaternary phosphonium compounds, sulfonium compounds, crown ethers or mixtures thereof.

Particularly suitable quaternary ammonium compounds include, for example, benzyl trimethyl ammonium chloride, benzyl trimethyl ammonium bromide, tetrabutyl ammonium chloride or mixtures thereof.

Suitable quaternary phosphonium compounds include those disclosed in U S-A-3,948,855 and U S -A-3,477,990.

Particularly suitable quaternary phosphonium compounds include, for example, methyl tributyl phosphonium dimethyl phosphate, benzyl triphenyl phosphonium chloride, methyl tri-n-butyl phosphonium bicarbonate or mixtures thereof.

Suitable sulfonium compounds include, for example, tributyl sulfonium iodide, dimethyl isobutyl sulfonium chloride, n-amyl dimethyl sulfonium hydroxide, or mixtures thereof.

In a batch process, the reaction is conducted in two or more stages and the salt removed from the reaction mixture continuously, or between stages. The salt can be removed by any conventional means such as, for example, by filtration or centrifugation and/or water washing. Likewise, the excess epoxy alkyl halide can be removed by any conventional means such as, for example, by distillation.

In a continuous process, the excess epoxy alkyl halide is removed from the epoxy resin product by any conventional means such as, for example, by distillation and any entrained quantities of salt contained in the organic phase is removed by the aforesaid conventional means for salt removal.

The following examples are illustrative of the present invention.

## EXAMPLE 1

### (PREPARATION OF DIGLYCIDYL ETHER OF DICYCLOPENTADIENE DIMETHYLOL)

Dicyclopentadiene dimethylol (192 g, 0.98 moles, 0.49 equiv.) was dissolved in epichlorohydrin (1000 $cm^3$ 12.5 moles, 12.5 equiv.) at 60°C. The mixture was cooled to 35°C and tetrabutyl ammonium chloride phase transfer catalyst (40 g of 50 percent aqueous solution, 0.072 equiv.) and 50 percent aqueous NaOH (547 g, 6.84 equiv.) were added with vigorous stirring (550 rpm in 2 liter baffled glass three neck flask). A precipitate was formed and the mixture exothermed to 76°C (cooling with ice was applied when the temperature of the reaction mixture reached 60°C). The aqueous layer congealed. Stirring and heating at

60 °C were continued for 30 minutes (1800 s). The reaction mixture was cooled, and ice water sufficient to just dissolve the precipitated NaCl was added with stirring. The mixture was allowed to settle and the aqueous layer was removed.

A like quantity of 50 percent aqueous NaOH at 32 °C was then mixed with the organic phase. The mixture was heated to and held at 60 °C for 30 minutes (1800 s). The aqueous phase was separated. The organic phase was washed with 20 percent $NaH_2PO_4$ aqueous solution and then with deionized water. The aqueous layer was separated and the epichlorohydrin was removed from the organic phase by vacuum distillation to give a yellow resin. The results of analysis of the resultant epoxy resin are given in Table I. Conversion of the final product to the diglycidyl ether was 96.1 percent based on the diglycidyl ether of dicyclopentadiene dimethylol (molecular weight of 308.4) having a theoretical percent epoxide of 27.9.

The above prepared epoxy resin was cured for 16 hours (57600 s) at 25 °C and 2 hours (7200 s) at 100 °C with triethylene tetramine in an equivalent ratio of amine to epoxy of 1:1. The results are given in Table I.

## COMPARATIVE EXPERIMENT A

### (PREPARATION OF DIGLYCIDYL ETHER OF DICYCLOPENTADIENE DIMETHYLOL WITH LEWIS ACID CATALYST)

Dicyclopentadiene dimethylol (588 g, 3 moles, 1.5 equiv.) was dissolved in ethylene dichloride (1372 g) at 75 °C while stirring. Stannic chloride (15.6 g, 0.06 moles) was added and the temperature was raised to reflux, 88 °C. Epichlorohydrin (583 g, 6.3 moles, 6.3 equiv.) was added over a 45 minute (2700 s) period from a dropping funnel. The solution then turned black. The reaction mixture was cooled to 70 °C and benzyl trimethyl ammonium chloride (18 ml of a 60 percent aqueous solution, 0.05 equiv.) and a 20 percent aqueous solution of sodium hydroxide (1500 g, 7.5 equiv.) were added and the reaction mixture cooled to 50 °C. Stirring was continued and the temperature maintained at 50 °C for 2 hours (7200 s). The reaction mixture was cooled to 35 °C and the aqueous layer was separated from the organic layer. To the organic layer was added an additional 750 g (3.75 equiv.) of 20 percent aqueous sodium hydroxide and 9 ml (0.025 equiv.) of benzyl trimethyl ammonium (60 percent aqueous solution) catalyst was added. The reaction mixture was heated to 50 °C and maintained thereat with stirring for 2 hours (7200 s). The reaction mixture was cooled to 35 °C and the aqueous layer was separated from the organic layer. The organic layer was washed three times with about 500 ml each of deionized water. The ethylene dichloride was removed under vacuum in a rotary evaporator. The analysis of the resultant product and properties when cured with triethylene tetramine as in Example 1 are given in Table I. Conversion to the diglycidyl ether of dicyclopentadiene dimethylol was 84.9 percent.

## EXAMPLE 2

### (PREPARATION OF DIGLYCIDYL ETHER OF CYCLOHEXANE DIMETHYLOL)

Cyclohexanedimethylol (432 g, 6 equiv.) was dissolved in epichlorohydrin (1450 g, 15.68 equiv.). Tetrabutylammonium chloride (40 grams of a 48 percent aqueous solution, 0.068 equiv.) was then added. Sodium hydroxide solution (568 ml of 50 percent aqueous solution, 10.8 equiv.) was added over a 30 minute (1800 s) period. The temperature of the reaction mixture rose from 35 ° to 60 °C where it was maintained by ice cooling. Stirring and heating were continued for 15 minutes (900 s) after the last addition of caustic. The mixture was cooled to 35 °C and ice water added sufficient to dissolve the precipitated salt. The aqueous layer was separated from the organic layer.

A second addition of a like quantity of 50 percent NaOH solution was then made, beginning at 32 °C. The mixture was held at 60 °C for 30 minutes (1800 s). Conversion of the alcohol to the diglycidyl ether was 64 percent. The aqueous phase was separated as before.

A third addition of a like quantity of 50 percent NaOH solution was added and the reaction mixture stirred at 60 °C for 15 minutes (900 s). Conversion of the alcohol to the diglycidyl ether was 80 percent. The aqueous layer was separated.

A fourth addition of a like quantity of 50 percent NaOH was added and the mixture stirred at 60 °C for 15 minutes (900 s). The reaction mixture was cooled to 35 °C and deionized water (568 ml) was added and the mixture cooled to 25 °C. The reaction mixture was then stirred for 30 minutes (1800 s) in order to reduce residual hydrolyzable chloride from 0.16 to 0.048 percent. The aqueous layer was separated, the organic layer washed with 20 percent $NaH_2PO_4$ aqueous solution (200 ml) and then with deionized water

(400 ml). The organic phase was separated and the epichlorohydrin removed by vacuum distillation at 150 °C and 133 Pa (1 mm Hg) to give a pale yellow resin. The results of analysis of the resultant epoxy resin and the properties when cured with triethylene tetramine as in Example 1 are given in Table I. Conversion of the final product to the diglycidyl ether was 92.5 percent based on the diglycidyl ether of cyclohexanedimethylol (molecular weight 254.3) having a theoretical percent epoxide of 33.85.

COMPARATIVE EXPERIMENT B

(PREPARATION OF DIGLYCIDYL ETHER OF CYCLOHEXANEDIMETHYLOL WITH LEWIS ACID CATALYST)

The procedure of Comparative Experiment A was repeated using cyclohexanedimethylol instead of dicyclopentadiene dimethylol. The analysis of the epoxy resin and properties of the resin cured with triethylene tetramine as in Example 1 are given in Table I. Conversion of the cyclohexanedimethylol to the diglycidyl ether was 77.4 percent.

EXAMPLE 3

(PREPARATION OF TRIMETHYLOL PROPANE TRIGLYCIDYL ETHER)

Trimethylolpropane (200 g, 4.48 equiv.) was dissolved in epichlorohydrin (2320 g, 25.08 equiv.) at 6O °C. Tetrabutylammonium chloride (60 g of a 50 percent aqueous solution, 0.108 equiv.) was then added. The solution was cooled to 35 °C and 50 percent aqueous NaOH solution (645 g, 8.06 equiv.) was added over 20 minutes (1200 s). The temperature was maintained between 60 ° and 75 °C with ice bath. Ten minutes (600 s) after the last NaOH solution was added, the temperature was cooled to 35 °C and ice water sufficient to dissolve the precipitated salt was added. Conversion of the alcohol to the diglycidyl ether was 56 percent. The aqueous layer was separated.

A second addition of 400 ml of 50 percent NaOH solution was made and the reaction mixture stirred for 10 minutes (600 s) at 60 °C. Conversion of the alcohol to the diglycidyl ether was 77 percent. The aqueous layer was separated as before.

A third addition of 400 ml of 50 percent NaOH solution was made and the reaction mixture stirred for 30 minutes (1800 s) at 60 °C. The aqueous layer was separated as before.

A fourth addition of 100 ml of 50 percent NaOH solution was made and the reaction mixture stirred for 10 minutes (600 s) at 33 °C. Then 100 ml deionized water was added and the mixture stirred for 15 minutes (900 s) at 30 °C. The organic layer was worked up as described in Example 2.

The results of the analysis of the above prepared epoxy resin and properties when cured as described in Example 1 are given in Table I. Conversion of the final product to the triglycidyl ether was 95.4 percent based on the triglycidyl ether of trimethylolpropane (molecular weight 302.4) having a theoretical percent eqoxide of 42.7.

EXAMPLE 4

(PREPARATION OF DIGLYCIDYL ETHER OF THE REACTION PRODUCT OF PROPYLENE OXIDE AND BISPHENOL A AT A MOLAR RATIO OF 2 TO 1 RESPECTIVELY)

The product of the reaction of bisphenol A plus two propylene oxides (172 grams, 1.0 equiv.) was dissolved in epichlorohydrin (255 g, 2.75 equiv.). Tetrabutylammonium chloride (10 grams of a 48 percent solution, 0.017 equiv.) was then added and the mixture heated to 60 °C. Sodium hydroxide (147 ml of 35 percent aqueous solution, 1.28 equiv.) was added and the mixture stirred for 30 minutes (1800 s) at 60 °C. The aqueous layer was separated. Alcohol conversion was 39.6 percent.

A second addition of 100 ml of 50 percent NaOH was made and the mixture stirred for 30 minutes (1800 s) at 60 °C. The aqueous layer was diluted with 100 ml ice water and the mixture cooled to 30 °C and stirred for 15 minutes (900 s). The aqueous phase was separated and the organic phase worked up as described in Example 2. The results of analysis of the resultant epoxy resin are given in Table I.

The results of the analysis of the above prepared epoxy resin and properties when cured as described in Example 1 are given in Table I. Conversion of the final product to the diglycidyl ether was 94.2 percent based on the diglycidyl ether of the diol (molecular weight of 456.5) having a theoretical percent epoxide of 18.9.

COMPARATIVE EXPERIMENT C

(PREPARATION OF DIGLYCIDYL ETHER OF THE REACTION PRODUCT OF PROPYLENE OXIDE AND BISPHENOL A IN A MOLE RATIO OF 2:1 RESPECTIVELY USING A LEWIS ACID CATALYST

The procedure of Comparative Experiment A was repeated except that the reaction product of propylene oxide and bisphenol A was employed instead of dicyclopentadiene dimethylol. The results of the analysis of the epoxy resin and the properties of the resin cured with triethylene tetramine as in Example 1 are given in Table I. Conversion of the diol to the diglycidyl either was 72 percent.

TABLE I

| | EXAMPLE 1 | COMP. EXPT. A | EXAMPLE 2 | COMP. EXPT. B |
|---|---|---|---|---|
| **PROPERTY OF EPOXY RESIN** | | | | |
| Epoxide, Percent | 26.8 | 23.7 | 31.3 | 26.2 |
| Epoxide Equivalent Weight | 160.4 | 180.8 | 137.38 | 164.3 |
| Hydrolyzable Chloride, Percent | 0.013 | 0.018 | 0.048 | 0.035 |
| Total Chloride, Percent | 0.369 | 3.79 | 0.62 | 5.07 |
| Viscosity at 25°C, (cps) | (217) | (367) | (46) | (52) |
| Pa·s | 0.217 | 0.367 | 0.046 | 0.052 |
| Aliphatic OH, Percent | 0.38 | 1.64 | 0.34 | 2.3 |
| **PROPERTIES OF CURED EPOXY RESIN** | | | | |
| Heat Distortion Temperature, °C | 53 | 45 | 53 | 41 |
| Tensile Strength, (psi) | (8603) | (8550) | (4394) | (1202) |
| MPa | 59.32 | 58.95 | 30.30 | 8.29 |
| Tensile Elongation, Percent | 6 | 4.7 | 13.7 | 34 |
| Izod Impact, (ft-lb/in of notch) | --- | --- | (0.45) | (0.62) |
| J/mm of notch | | | 0.024 | 0.033 |
| Flexural Strength, (psi) | (13430) | (11894) | (9224) | (3472) |
| MPa | 92.60 | 82.01 | 63.60 | 23.94 |
| Flexural Modulus, (psi x $10^5$) | (2.5) | (2.2) | (3) | (1.5) |
| GPa | 1.7 | 1.5 | 2.1 | 1.0 |

TABLE I (cont.)

| | EXAMPLE 3 | EXAMPLE 4 | COMP. EXPT. C |
|---|---|---|---|
| **PROPERTY OF EPOXY RESIN** | | | |
| Epoxide, Percent | 40.75 | 17.8 | 13.6 |
| Epoxide Equivalent Weight | 105.5 | 241.5 | 315.7 |
| Hydrolyzable Chloride, Percent | 0.084 | 0.009 | 0.044 |
| Total Chloride, Percent | 0.43 | 0.32 | 3.5 |
| Viscosity at 25°C, (cps) | (93) | (1892) | (4040) |
| Pa·s | 0.093 | 1.892 | 4.040 |
| Aliphatic OH, Percent | 1.67 | 0.22 | 1.86 |
| **PROPERTY OF CURED EPOXY RESIN** | | | |
| Heat Distortion Temperature, °C | 69 | 40 | 27 |
| Tensile Strength, psi | 7057 | 6960 | 764 |
| MPa | 48.66 | 47.99 | 5.27 |
| Tensile Elongation, Percent | 4.3 | 5.3 | >25 |
| Izod Impact, (ft-lb/in of notch) | --- | (0.54) | (0.4) |
| J/mm of notch | | 0.029 | 0.021 |
| Flexural Strength, (psi) | (6939) | (9631) | (319) |
| MPa | 47.84 | 66.40 | 2.2 |
| Flexural Modulus, (psi x $10^5$) | (6.1) | (4) | (0.8) |
| GPa | 4.2 | 2.8 | 5.5 |

## Claims

1. A process for preparing an epoxy resin by reacting (A) a material having an average of more than one aliphatic hydroxyl group per molecule with (B) an epoxy alkyl halide in the presence of (C) an alkali metal hydroxide and (D) at least one phase transfer catalyst, wherein the proportions of components (A) and (B) are such that component (A) dissolves in component (B) and the ratio of equivalents of

component (B) to equivalents of component (A) is greater than 1:1, component (C) is employed as an 18 to 70 weight percent aqueous solution and in a quantity which is sufficient to cause separation of the reaction mixture into an aqueous phase and an organic phase and which is at least stoichiometric with the amount of unreacted component (A) after the reaction, component (D) is employed in a quantity of from 0.1 to 10 weight percent based on the reaction mixture, and the reaction is conducted at a temperature of from 0° to 110° C, allowing the reaction mixture to separate into an aqueous phase and an organic phase, removing the aqueous phase,

**characterized by**

repeating at least once the steps reacting the organic phase with at least one further quantity of an 18-70 weight percent aqueous solution of an alkali metal hydroxide sufficient to cause separation of the reaction mixture into an aqueous phase and an organic phase and which is at least stoichiometric with the amount of unreacted component (A), allowing the reaction mixture again to separate into an aqueous phase and an organic phase, removing the aqueous phase, and recovering the epoxy resin from the organic phase.

**2.** A process of Claim 1 wherein
(1) the equivalent ratio of (B) to (A) is form 1:1 to 10:1;
(2) the component (C) is employed in a concentration of from 45 to 55 percent by weight;
(3) component (D) is present in a quantity of from 0.5 to 5.0 percent; and
(4) the reaction is conducted at a temperature of from 0° C to 70° C.

**3.** A process of Claim 1 wherein
(1) the equivalent ratio of component (B) to component (A) is from 1.5:1 to 5:1;
(2) component (D) is present in a quantity of from 0.5 to 1.5 percent by weight; and
(3) the reaction is conducted at a temperature of from 15° C to 60° C.

**4.** A process of claims 1 to 3 wherein
(1) component (A) is trimethylol propane, cyclohexanedimethylol, dicyclopentadienedimethylol, 1,4-butanediol, ethylene glycol, propylene glycol, pentaerythritol, or dipropylene glycol;
(2) component (B) is epichlorhydrin;
(3) component (C) is sodium hydroxide; and
(4) component (D) is a quaternary ammonium or quaternary phosphonium compound.

**Revendications**

**1.** Procédé pour la préparation d'une résine époxy par réaction (A) d'un matériau ayant en moyenne plus d'un groupe hydroxyle aliphatique par molécule avec (B) un halogénure d'époxy-alkyle, en présence (C) d'un hydroxyde de métal alcalin et (D) d'au moins un catalyseur par transfert de phase, où les proportions des composants (A) et (B) sont telles que le composant (A) se dissout dans le composant (a) et que le rapport des équivalents du composant (B) aux équivalents du composant (A) est supérieur à 1 : 1, où le composant (C) est utilisé sous la forme d'une solution aqueuse à 18 - 70 pour-cent en poids et en une quantité qui est suffisante pour provoquer la séparation du mélange de réaction en une phase aqueuse et une phase organique et qui est au moins stoechiométrique par rapport à la quantité du composant (A) n'ayant pas réagi après la réaction, où le composant (D) est utilisé en une quantité valant de 0,1 à 10 pour-cent en poids par rapport au mélange de réaction et où la réaction est effectuée à une température comprise entre 0° et 110° C, ce qui permet la séparation du mélange de réaction en une phase aqueuse et une phase organique, et l'élimination de la phase aqueuse, caractérisé en ce que l'on renouvelle au moins une fois les étapes de réaction de la phase organique avec au moins une quantité supplémentaire d'une solution aqueuse à 18 - 70 pour-cents en poids d'un hydroxyde de métal alcalin, suffisante pour provoquer la séparation du mélange de réaction en une phase aqueuse et une phase organique et qui est au moins stoechiométrique par rapport à la quantité du composant (A) n'ayant pas réagi, ce qui permet à nouveau la séparation du mélange de réaction en une phase aqueuse et une phase organique; l'élimination de la phase aqueuse et la récupération de la résine époxy à partir de la phase organique.

**2.** Procédé selon la revendication 1, dans lequel
(1) le rapport des équivalents de (B) à (A) vaut de 1 : 1 à 10 : 1 ;
(2) le composant (C) est utilisé à une concentration comprise entre 45 et 55 pour-cent en poids ;

(3) le composant (D) est présent en une quantité comprise entre 0,5 et 5,0 pour-cent ; et
(4) la réaction est effectuée à une température comprise entre 0° C et 70° C.

3. Procédé selon la revendication 1, dans lequel
(1) le rapport des équivalents du composant (B) au composant (A) vaut de 1,5 : 1 à 5 : 1 ;
(2) le composant (D) est présent en une quantité comprise entre 0,5 et 1,5 pour-cent en poids ; et
(3) la réaction est effectuée à une température comprise entre 15° C et 60° c.

4. Procédé selon les revendications 1 à 3, dans lequel
(1) le composant (A) est le triméthylolpropane, le cyclohexanediméthylol, le dicyclopentadiènediméthylol, le 1,4-butanediol, l'éthylèneglycol, le propylèneglycol, le pentaérythritol ou le dipropylèneglycol ;
(2) le composant (B) est l'épichlorhydrine ;
(3) le composant (C) est l'hydroxyde de sodium ; et
(4) le composant (D) est un composé d'ammonium quaternaire ou de phosphonium quaternaire.

**Patentansprüche**

1. Verfahren zum Herstellen eines Epoxyharzes durch Umsetzen (A) eines Materials mit im Mittel mehr als einer aliphatischen Hydroxylgruppe pro Molekül mit (B) einem Epoxyalkylhalid in Gegenwart von (C) einem Alkalihydroxid und (D) mindestens einem Phasenübertragungskatalysator, wobei die Verhältnisse der Bestandteile (A) und (B) so sind, daß Bestandteil (A) sich in Bestandteil (B) löst und das Äquivalentverhältnis von Bestandteil (B) zu Bestandteil (A) größer 1:1 ist, Bestandteil (C) als 18-70 gewichtsprozentige Lösung verwendet wird in einer Menge, die ausreichend ist, die Trennung der Reaktionsmischung in eine wäßrige Phase und eine organische Phase auszulösen, und die mindestens stöchiometrisch ist mit der Menge nicht umgesetzten Bestandteils (A) nach der Reaktion, Bestandteil (D) in einer Menge von 0,1-10 Gew.-%, bezogen auf Reaktionsmischung, verwendet wird, und die Reaktion bei einer Temperatur von 0°-110° C ausgeführt wird, und die Trennung der Reaktionsmischung in eine wäßrige Phase und eine organische Phase zugelassen wird, die wäßrige Phase entfernt wird,
**gekennzeichnet durch**
Wiederholen mindestens einmal der Schritte des Umsetzens der organischen Phase mit mindestens einer weiteren Menge von 18-70 gewichtsprozentiger wäßriger Lösung eines Alkalihydroxids, ausreichend, um die Trennung der Reaktionsmischung in eine wäßrige Phase und eine organische Phase auszulösen, und die mindestens stöchiometrisch ist mit der Menge nicht umgesetzten Bestandteils (A), Ermöglichen der Reaktionsmischung, sich erneut in eine wäßrige Phase und eine organische Phase zu trennen, Entfernen der wäßrigen Phase und Gewinnen des Epoxyharzes aus der oganischen Phase.

2. Verfahren nach Anspruch 1,
**dadurch gekennzeichnet, daß**
(1) das Äquivalentverhältnis von (B):(A) von 1:1-10:1, beträgt,
(2) Bestandteil (C) in einer Konzentration von 45-55 Gew.-% verwendet wird,
(3) Bestandteil (D) in einer Menge von 0,5-5,0 Gew.-% vorhanden ist und
(4) die Reaktion bei einer Temperatur on 0° C-70° C ausgeführt wird.

3. Verfahren nach Anspruch 1,
**dadurch gekennzeichnet, daß**
(1) das Äquivalentverhältnis von Bestandteil (B) Bestandteil (A) von 1,5:1-5:1 beträgt,
(2) Bestandteil (D) in einer Menge von 0,5-1,5 Gew.-% vorhanden ist und
(3) die Reaktion bei einer Temperatur von 15° C-60° C ausgeführt wird.

4. Verfahren nach Ansprüchen 1-3,
**dadurch gekennzeichnet, daß**
(1) Bestandteil (A) Trimethylolpropan, Cyclohexandimethylol , Dicyclopentadiendimethylol, 1,4-Butandiol, Ethylenglycol, Propylenglycol, Pentaerythrit oder Dipropylenglycol ist,
(2) Bestandteil (B) Epichlorhydrin ist,
(3) Bestandteil (C) Natriumhydroxid ist und
(4) Bestandteil (D) eine quartäre Ammonium- oder quartäre Phosphoniumverbindung ist.